(19)

Europäisches
Patentamt
European
Patent Office
Office européen
des brevets

(11)     **EP 2 848 064 B1**

(12)                   **EUROPEAN PATENT SPECIFICATION**

(45) Date of publication and mention
of the grant of the patent:
**03.08.2016   Bulletin 2016/31**

(21) Application number: **13730345.9**

(22) Date of filing: **09.05.2013**

(51) Int Cl.:
*H04W 72/04* *(2009.01)*     *H04L 1/00* *(2006.01)*
*H04L 5/00* *(2006.01)*

(86) International application number:
**PCT/IB2013/053750**

(87) International publication number:
**WO 2013/168116 (14.11.2013 Gazette 2013/46)**

(54) **METHOD, APPARATUS AND COMPUTER PROGRAM FOR MULTI-CELL PERIODIC FEEDBACK OF CHANNEL STATE INFORMATION**

VERFAHREN, VORRICHTUNG UND COMPUTERPROGRAMM FÜR MEHRZELLIGES PERIODISCHES KANALSTATUSDATEN-FEEDBACK

PROCÉDÉ, APPAREIL ET PROGRAMME INFORMATIQUE POUR DONNER UN FEEDBACK PÉRIODIQUE SUR UN ÉTAT DE CANAL DANS UN CONTEXTE MULTI CELLULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2012   GB 201208303**

(43) Date of publication of application:
**18.03.2015   Bulletin 2015/12**

(73) Proprietor: **Broadcom Corporation
Irvine, CA 92617 (US)**

(72) Inventors:
• **GAO, Chunyan
Beijing 100035 (CN)**

• **ZENG, Erlin
Beijing, 100096 (CN)**
• **TAN, Shuang
Beijung, 102218 (CN)**
• **MATTILA, Jari
00990 Helsinki (FI)**

(74) Representative: **Bosch Jehle
Patentanwaltsgesellschaft mbH
Flüggenstraße 13
80639 München (DE)**

(56) References cited:
**WO-A2-2011/034321     WO-A2-2011/085230**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a method, apparatus and computer program for controlling a user equipment. Exemplary and non-limiting embodiments of this invention relate generally to wireless communication systems, methods, devices and computer programs, and specific examples relate to configuring an uplink data channel for periodic feedback of channel state/quality information for multiple channels or cells.

Background

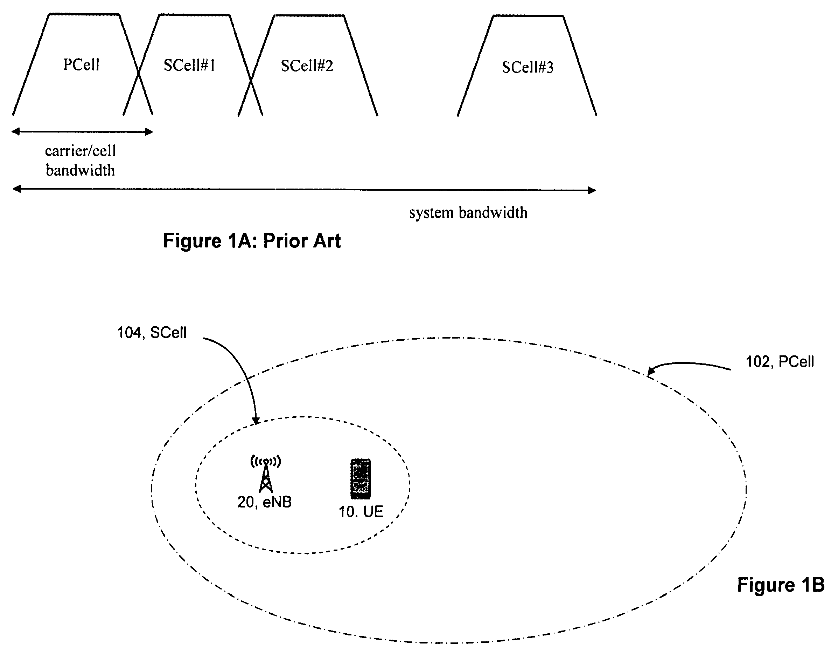

The Evolved Universal Terrestrial Radio Access (E-UTRA) system, sometimes referred to as Long Term Evolution (LTE or LTE-Advanced), deploys its total bandwidth as multiple component carriers, of which Figure 1A is an example. Each user equipment (UE) is assigned a primary component carrier (PCell) and may be assigned also one or more secondary component carriers (SCell). There are various ways to deploy these component carriers: one or more may be backwards compatible with LTE Release 8 while others may not be due to a lack of some or all control channels or a bandwidth not fitted to the 20 MHz structure of 3GPP Release 8; different component carriers may have different bandwidths; some or all may not be frequency-adjacent to the others; some may have less than a full set of control channels (full set meaning compatible with 3GPP Release 8) or no control channel region at all; and one or more may lie in licence-exempt bands. Carrier aggregation is not limited only to the LTE radio access technology but for more particular detail of these teachings LTE is used in the examples below as a non-limiting environment which can exploit these teachings to advantage.

Figure 1B illustrates one UE 10 communicating with a network access node 20 (eNB in LTE) on a PCell 102 and on a SCell 104. The dashed lines show the respective ranges of these cells 102, 104 and so the PCell may be considered a macro cell and the SCell may be considered a micro/pico cell. In other relevant radio environments, there may be two macro cells, there may be different transmission points for the PCell 102 and the SCell 104, or there may be more than only one SCell. Regardless, the UE 10 will see a different channel for each of the PCell 102 and the SCell 104. It is known to improve throughput for the UE 10 to report channel conditions back to the eNB 20 for link adaptation.

In the ongoing development of LTE concerning carrier aggregation enhancements for Release 11 (Rel-11), certain agreements have been reached (see Meeting Minutes of 3GPP RAN1 #68bis, v010; Jeju, Korea; 26-30 March 2012). But still unresolved is how Rel-11 is to support multi-cell periodic CSI (channel state information) multiplexing for downlink carrier aggregation.

In LTE Rel-8, periodic channel state information (CSI) can use PUCCH format 2 (PUCCH = physical uplink control channel), for which the PUCCH resource is configured via radio resource control (RRC) signalling. Reconfiguring via RRC signalling imposes quite a long delay as compared to using physical layer signalling but for Rel-8 this has proved quite workable. It does not appear that the Rel-8 technique will be practical for Rel-11 because the UE might need to transmit CSI for multiple cells and the PUCCH is not large enough. If periodic CSI for multiple cells is transmitted via the physical uplink shared channel (PUSCH), the delay of RRC reconfiguration signalling will impose large inefficiencies.

If for example in Figure 1B the eNB needs to schedule some other UE's PUSCH in the same PCell resource as the first UE 10 is using for its RRC-scheduled multi-cell CSI, or if there is a partial overlap with the PUSCH resource configured for CSI reporting, the delay in RRC signalling makes it impossible to adjust the latter on a subframe basis.

WO2011/085230A2 discloses reporting channel state information in periodic and aperiodic reports for multiple component carriers or serving cells. Channel state information may be reported for a subset of aggregated downlink carriers or serving cells. For an aperiodic report, the carrier(s)/serving cell(s) for which channel state information is reported are determined based on the request for the aperiodic report. When a CQI/PMI/RI report and a HARQ ACK/NACK report coincide in a subframe, the HARQ ACK/NACK report is transmitted on PUCCH, and the CQI/PMI/RI report is transmitted on PUSCH.

WO2011/034321A2 discloses a method and apparatus for transmitting uplink control information through a Physical Uplink Shared Channel (PUSCH) at a user equipment, including receiving configuration information for periodic PUSCH transmission through a first protocol layer signaling, receiving information indicating activation or deactivation of the periodic PUSCH transmission through a second protocol layer signaling, wherein the second protocol layer is lower than the first protocol layer, and periodically transmitting the uplink control information through the PUSCH according to the configuration information if the periodic PUSCH transmission is activated.

Summary

According to a first aspect of the present invention, there is provided a method for controlling a user equipment, the method comprising: determining from a received downlink resource allocation that an uplink data channel is reconfigured for multi-cell periodic feedback of channel state information, where the resource allocation indicates that the uplink data channel is reconfigured by at least one of: a predetermined combination of at least two fields of the resource allocation, wherein the predetermined combination is inconsistent for user equipment which are not capable of multi-cell periodic feedback of channel state information, and wherein the predetermined combination comprises a modulation and coding scheme field set to a reserved value, a channel state indication field set to not trigger CSI, and a new data indication field indicating the uplink data channel is not a retransmission; and a predefined sequence in a field of the resource allocation, in which the predefined sequence is received by the user equipment in radio resource control signalling; and in response to the determining, utilising at least a first and a second instance of the uplink data channel to send the multi-cell periodic feedback of the channel state information.

According to a second aspect of the present invention, there is provided apparatus for controlling a user equipment, the apparatus comprising a processing system constructed and arranged to cause the user equipment to perform: determining from a received downlink resource allocation that an uplink data channel is reconfigured for multi-cell periodic feedback of channel state information, where the resource allocation indicates that the uplink data channel is reconfigured by at least one of: a predetermined combination of at least two fields of the resource allocation, wherein the predetermined combination is inconsistent for user equipment which are not capable of multi-cell periodic feedback of channel state information, and wherein the predetermined combination comprises a modulation and coding scheme field set to a reserved value, a channel state indication field set to not trigger CSI, and a new data indication field indicating the uplink data channel is not a retransmission; and a predefined sequence in a field of the resource allocation, in which the predefined sequence is received by the user equipment in radio resource control signalling; and in response to the determining, utilising at least a first and a second instance of the uplink data channel to send the multi-cell periodic feedback of the channel state information.

In this embodiment the apparatus may be the UE itself or one or more components thereof.

The processing system may comprise at least one memory including computer program code and at least one processor, the at least one memory with the computer program code being configured with the at least one processor to cause the user equipment to perform as described above.

According to a third aspect of the present invention, there is provided a computer program comprising a set of instructions which, when executed on a user equipment causes the user equipment to perform the steps of: determining from a received downlink resource allocation that an uplink data channel is reconfigured for multi-cell periodic feedback of channel state information, where the resource allocation indicates that the uplink data channel is reconfigured by at least one of: a predetermined combination of at least two fields of the resource allocation, wherein the predetermined combination is inconsistent for user equipment which are not capable of multi-cell periodic feedback of channel state information, and wherein the predetermined combination comprises a modulation and coding scheme field set to a reserved value, a channel state indication field set to not trigger CSI, and a new data indication field indicating the uplink data channel is not a retransmission; and a predefined sequence in a field of the resource allocation, in which the predefined sequence is received by the user equipment in radio resource control signalling; and in response to the determining, utilising at least a first and a second instance of the uplink data channel to send the multi-cell periodic feedback of the channel state information.

There may be provided a computer readable memory tangibly storing the program set of instructions which, when executed on a user equipment, causes the user equipment to perform as described above.

Examples of embodiments of the present invention provide a way to dynamically reconfigure the PUSCH, or more generally an uplink data channel, for the reporting of multi-cell periodic CSIs without sacrificing efficiency/throughput when scheduling other users. Periodic implies a persistent or semi-persistent scheduling so the eNB will not have to send a new resource allocation for each PUSCH that is to carry the CSI reports.

Further features and advantages of the invention will become apparent from the following description of preferred embodiments of the invention, given by way of example only, which is made with reference to the accompanying drawings.

Brief Description of the Drawings

Figure 1A shows a prior art frequency diagram broadly illustrating a carrier aggregation bandwidth divided into component carriers;

Figure 1B shows a schematic diagram illustrating an exemplary but non-limiting radio environment in which these teachings may be practised to advantage;

Figure 2 shows a signalling diagram illustrating an example of various messages exchanged between one or more network access nodes/eNBs and a UE according to an exemplary embodiment of these teachings;

Figure 3 shows a logic flow diagram that illustrates from the perspective of the UE the operation of an example of a method, and a result of execution of computer program instructions embodied on a computer readable memory, in accordance with certain exemplary embodiments of these teachings; and

Figure 4 shows a non-limiting example of a simplified block diagram of a UE and its serving access node eNB as well as a higher network control element, which are exemplary electronic devices suitable for use in practising some example embodiments of these teachings.

Detailed Description

While the specific examples presented below are in the context of the LTE system, these are not limiting to the broader teachings of the invention which may be applied with similar advantages to other radio access technologies which employ persistent scheduling and carrier aggregation.

In conventional LTE, it is possible to use physical layer signalling to reconfigure resources for a semi-persistent scheduling (SPS) of the physical uplink shared channel (PUSCH). Specifically, this physical layer signalling is via the physical downlink control channel (PDCCH), which allocates the PUSCH resource. In this case, the UE assumes the SPS PUSCH resource is reconfigured when it detects that a PDCCH is validated for SPS [3GPP TS 36.213, v10.4.0 (2012-12), section 9.2] and the new data indicator (NDI) field in that PDCCH is set to zero [TS 36.321, v10.4.0 (2011-12), section 5.4.1].

There have been some proposals to utilise the PUSCH for the UE to transmit multiple periodic CSI, such as at document R1-113779 by Texas Instruments entitled "Further Analysis of Multi-Cell Periodic CSI Reporting", and at document R1-113630 by Huawei and HiSilicon entitled "Design and evaluation for CSI signalling enhancement" [both from 3GPP TSG RAN WG1 #67; San Francisco, USA; 14-18 November 2011].

Document R1-113779 proposes to configure the periodic CSI reporting mechanism by RRC signalling, which is a similar mechanism as the aperiodic CSI triggering used in conventional LTE. But this approach also requires a new downlink grant each time a periodic CSI is to be transmitted by the UE, which leads to extra downlink control overhead.

Document R1-113630 proposes two different options: trigger the PUSCH for multiple periodic CSI by scrambling the uplink grant with a SPS-C-RNTI (C-RNTI = cell radio network temporary identifier); or use a mechanism similar to the conventional LTE aperiodic SPS triggering to reconfigure the PUSCH for multiple-cell periodic CSI. The first option leads to interactions between periodic CSI and SPS PUSCH, which complicates the signalling design. Furthermore, the periodicities of CSI and SPS PUSCH are not necessarily the same, which requires a change to the UE behaviour in terms of monitoring for a PDCCH scrambled by the SPS-C-RNTI. The latter option only supports PUSCH reconfiguration via RRC, which suffers from the above-mentioned drawback of increased control signalling overhead.

The inventors have resolved several approaches to overcome the above shortfalls in triggering a reconfiguration of the PUSCH for multiple cell periodic CSI on a subframe basis. In these, it is assumed that the UE is configured via RRC signalling with one PUSCH resource for multiple periodic CSI transmission. From this RRC signalling the UE knows to look to the PDCCH for whether or not a PUSCH resource is reconfigured for multi-cell periodic CSI, and certain indications in the PDCCH are what triggers that reconfiguration. Absent that reconfiguration, the eNB can schedule data as is normal.

As will be detailed below, four different triggering mechanisms are presented herein for this reconfiguration. These are briefly summarised as follows:

- A first triggering mechanism uses a predefined combination of a few fields in the PDCCH downlink control information (DCI) format to indicate that the PDCCH is for reconfiguration of a PUSCH resource for multiple periodic CSI feedback.
- A second triggering mechanism redefines some of the CSI request states to indicate that the PDCCH is for reconfiguration of a PUSCH resource for multiple periodic CSI feedback.
- A third triggering mechanism uses a new rule to identify a PDCCH which is for reconfiguration of a PUSCH resource for multiple periodic CSI feedback.
- A fourth triggering mechanism introduces a new RNTI, termed herein as a "pCSI-C-RNTI" (p for periodic), and uses certain fields in the PDCCH DCI format to indicate that the PDCCH is for reconfiguration of a PUSCH resource for multiple periodic CSI feedback.

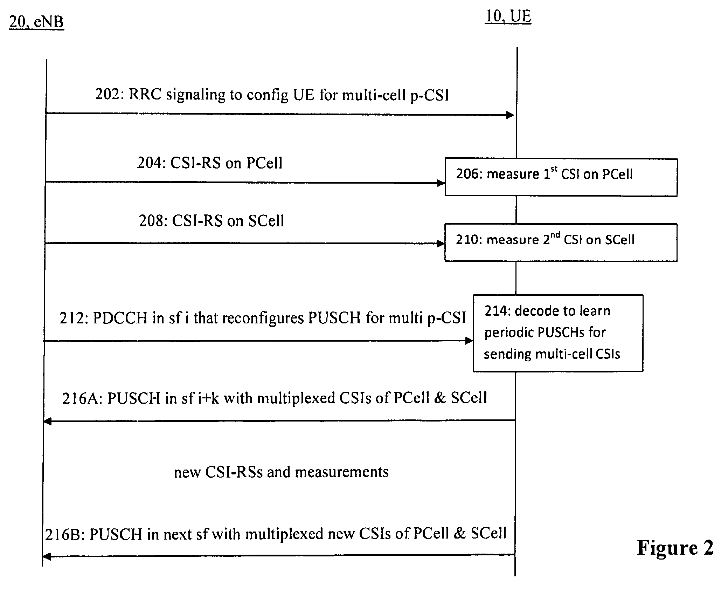

Each of these is detailed more particularly below. But initially consider the signalling diagram of Figure 2 as an overview of the signalling being exchanged between the eNB and the UE and on what logical channels/layers involved. First the eNB 20 sends RRC signalling 202 to configure the UE for multi-cell periodic CSI reporting. The eNB 20 sends a CSI reference signal (RS) on the PCell at 204 and on the SCell at 208, which the UE 10 measures at 206 and 210 respectively and determines the respective CSIs. When the UE is configured for CSI feedback separately for each cell, there is a possibility these CSIs will collide in an uplink subframe and this possibility increases as the UE is configured for a higher number of cells.

Specifically, the eNB 20 sends a PDCCH 212 to the UE 10 that reconfigures the PUSCH that this PDCCH allocates (or an offset PUSCH) for multi-cell periodic CSI reporting. This PDCCH 212 is in subframe $i$ and grants a PUSCH in subframe $k+i$ to the UE, and further has any of the triggering mechanisms mentioned above and detailed further below. There are then in Figure 2 two instances of the PUSCH. In a first instance 216A, the PUSCH is the one that is granted by the PDCCH, which for example lies in subframe $i+k$. The triggered reconfiguration tells the UE to send multiple CSIs in that granted PUSCH, so if it has one PCell and one SCell it will multiplex those two CSIs, but if it has more than only two cells it will multiplex them all into the granted PUSCH shown as the first instance 216A. Specifically, in the PUSCH lying in subframe *i+k* which is granted by the PDCCH in subframe *i,* the UE sends its CSI measured at 206 for the PCell multiplexed with its CSI measured at 210 for the SCell. The next following PUSCH is the second instance 216B in which the UE sends its multiplexed CSIs measured again from new CSI-RSs according to its periodic CSI configurations.

First consider the first triggering mechanism. In one example of this embodiment, there is a predefined combination of the modulation and coding scheme (MCS) field (I_MCS), the aperiodic CSI request field (A-CSI), and the NDI field. Once the UE sees this predefined combination, it knows the eNB is triggering reconfiguration of the PUSCH for multi-cell periodic CSI reporting. In an embodiment, the predefined combination is not useable for legacy versions of LTE and so its use for this purpose will have no impact on legacy UEs.

Following is one non-limiting example of such a combination:

- I_MCS = one of 29, 30 or 31 (this will be a reserved MCS value for this purpose).
- A-CSI = 0, or 00 (depending on whether A-CSI is one or two bits wide) meaning no A-CSI is triggered.
- NDI bit has been toggled (meaning this PUSCH is not a retransmission for a previous PUSCH).

If for example the UE detects such a predefined combination in the PDCCH DCI in subframe *i,* the UE will assume that this PDCCH is for reconfiguration of the PUSCH resource for multiple cell periodic CSI feedback. A first instance of the semi-persistently scheduled PUSCH is in subframe *i+k,* and a second instance of it is in some subframe following in which the UE is to transmit multiplexed CSIs from different cells according to its CSI configurations. The UE uses these PUSCH resources assigned by this PDCCH DCI for multiple periodic CSI feedback based on the periodic CSI configuration. The value of *k* depends on the uplink hybrid automatic repeat request (HARQ) timing. For example, *k*=4 in some (but not all) cases of *i* for conventional LTE HARQ timing.

This first triggering mechanism enables dynamic reconfiguration of the PUSCH resource for multiple cell periodic CSI feedback by making use of a combination which is considered as inconsistent for PDCCH in the LTE release which is current as of the filing date herein, so only a UE that supports this new multi-cell periodic CSI feature is able to interpret the DCI format accordingly. Since there is no impact on legacy UEs, system-wide adoption of this first triggering mechanism will be quite simple.

Now consider the second triggering mechanism. Some of the CSI request states are redefined to indicate that the PDCCH is for reconfiguration of PUSCH resource for multiple periodic CSI feedback. As a non-limiting example, if the UE detects that the CSI request state in PDCCH DCI format is "01" in subframe i, the UE will assume that the PDCCH is for reconfiguration of the PUSCH resource for multiple periodic CSI feedback. In subframe *i+k* and the subframe(s) following, the UE uses the PUSCH resources assigned by this PDCCH DCI for multiple periodic CSI feedback. As above, the value of k depends on the uplink HARQ timing.

The third triggering mechanism uses a predefined sequence to identify a PDCCH which is for reconfiguration of PUSCH resource for multiple periodic CSI feedback. This can be for example in the resource allocation field in the DCI format. If the predefined sequence is Sequence S1 = {$b_0$, $b_1$, ..., $b_M$}, M represents the width of the resource allocation field according to DCI format and S1 can be predefined via RRC signalling. When the UE sees this sequence in the resource allocation field, it assumes that the PDCCH is for reconfiguration of PUSCH resource for multiple periodic CSI feedback.

Different fields within the DCI format can then be used to indicate the exact change of PUSCH resource compared to the predefined PUSCH resources. For example, the CSI request bit can be redefined to indicate a PUSCH resource offset compared to the predefined ones, or some of the MCS states can be redefined to indicate a PUSCH resource offset.

A specific but non-limiting example will more particularly describe this third triggering mechanism. Assume a UE is configured via RRC signalling with one PUSCH resource (physical resource block PRB#*i*) for potential multiple periodic CSI feedback. Then once the UE has a multiple periodic CSI report to be fed back in the same subframe according to its periodic CSI configuration, the UE will feedback in the configured PRB#*i*, unless a special DCI is detected in subframe at least *k* ms earlier. The special DCI can be a DCI format 0, and is identified by setting the following fields to a value predefined, e.g. a value indicating PRB#*i*:

- frequency hopping flag - 1 bit
- resource block assignment and hopping resource allocation - $\left\lceil \log_2(N_{RB}^{UL}(N_{RB}^{UL}+1)/2) \right\rceil$ bits.

In the special DCI, the PUSCH resource for multiple periodic CSI is reconfigured, e.g. by using one of or a combination of the following fields to indicate an offset relative to configured PRB#*i* in RRC signalling:

- MCS and redundancy version (e.g. 5 bits).
- CSI request (e.g. 1 or 2 bits).

In this case, the UE will send the multiple periodic CSI in the reconfigured PUSCH resource PRB#*i+offset*.

The fourth triggering mechanism utilises a new RNTI dedicated for this purpose, termed a p-CSI C-RNTI. If the UE detects in some subframe i a PDCCH which is scrambled by this dedicated RNTI, the UE assumes that this PDCCH is for configuration or reconfiguration of PUSCH resources for multiple cell periodic CSI feedback. The PUSCH that is reconfigured for this multiple periodic CSI feedback lies in subframe *i+k,* where the value of *k* depends on UL HARQ timing

In one embodiment, there are also one or more fields in the PDCCH DCI which indicate that the PDCCH is for reconfiguration of PUSCH resource for multiple periodic CSI feedback. For example, if the NDI has a value of zero, the UE shall use the PUSCH indicated by this DCI format in only the subframe *i+k* for multiple cell CSI feedback. Or alternatively if the value of the NDI is one, the UE assumes the PUSCH resource is reconfigured and so the UE shall use the PUSCH indicated by this DCI format in the subframe *i+k* and the later subframe(s) for CSI feedback. Since this PDCCH was scrambled with the dedicated RNTI, the UE knows it is not allocating a PUSCH for re-transmission so either NDI value can be used to confirm the reconfiguration of the PUSCH so long as the meaning is understood in advance between the eNB and the UE.

In a still further embodiment, if DCI format 1A is used for the PDCCH but is not scrambled by the dedicated p-CSI C-RNTI, the "Flag for format0/format1A differentiation" can be used to trigger the reconfiguration of the PUSCH, assuming the eNB and the UE both understand that it is predefined that the dedicated scrambling RNTI will not be used for a PDCCH using format 1A. Or alternatively if certain MCS levels are not supported for multiple periodic CSI transmissions, the DCI bit states corresponding to these spare MCS levels can be used to trigger the reconfiguration of the PUSCH. As a still further example, if a Downlink Assignment Index (DAI) field is present in the PDCCH, it can be used to trigger the reconfiguration of the PUSCH.

The exemplary embodiments of the teachings above provide certain technical effects, such as was noted above supporting PUSCH resource reconfiguration on a subframe basis. There is no impact on the conventional SPS PUSCH procedures, and certain of the triggering mechanisms above are fully compatible with legacy UEs and so are relatively easy to implement in a practical system that serves legacy UEs alongside those which are capable of reporting multi-cell periodic CSI.

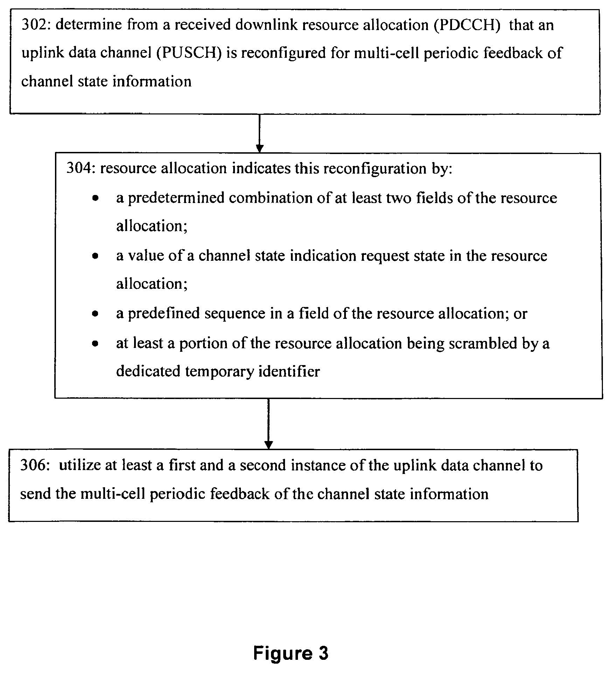

Figure 3 shows a logic flow diagram which summarises some example embodiments of the invention. Figure 3 illustrates from the perspective of the user equipment, while the perspective of the cellular access node is similar except the eNB sends the resource allocation and receives the CSI reports in the uplink data channels. An apparatus implementing Figure 3 may be the entire UE device 10, or may be one or more components thereof, such as a modem, chipset, or the like. Figure 3 may be considered to illustrate the operation of a method for operating a device or database system, and a result of execution of a computer program tangibly stored in a computer readable memory, and a specific manner in which components of an electronic device or database system are configured to cause that electronic device/system to operate.

Such blocks and the functions they represent are non-limiting examples, and may be practised in various components such as integrated circuit chips and modules, and the exemplary embodiments of this invention may be realised in an apparatus that is embodied as an integrated circuit. The integrated circuit, or circuits, may comprise circuitry (as well as possibly firmware) for embodying at least one or more of a data processor or data processors, a digital signal processor or processors, baseband circuitry and radio frequency circuitry that are configurable so as to operate in accordance with the exemplary embodiments of this invention.

Such circuit/circuitry embodiments include any of the following: (a) hardware-only circuit implementations (such as implementations in only analog and/or digital circuitry) and (b) combinations of circuits and software (and/or firmware), such as: (i) a combination of processor(s) or (ii) portions of processor(s)/software (including digital signal processor(s)), software, and memory(ies) that work together to cause an apparatus, such as a mobile phone/UE, to perform the various functions summarised at Figure 3) and (c) circuits, such as a microprocessor(s) or a portion of a microprocessor(s), that require software or firmware for operation, even if the software or firmware is not physically present. This definition of "circuitry" applies to all uses of this term in this specification, including in any claims. As a further example, as used in this specification, the term "circuitry" would also cover an implementation of merely a processor (or multiple processors) or portion of a processor and its (or their) accompanying software and/or firmware. The term "circuitry" also covers, for example, a baseband integrated circuit or applications processor integrated circuit for a mobile phone/user equipment or a similar integrated circuit in a server, a cellular network device, or other network device.

At block 302 of Figure 3, the UE determines from a received downlink resource allocation that an uplink data channel is reconfigured for multi-cell periodic feedback of channel state information. Block 304 summarises the four triggering mechanisms discussed above for how the UE makes the determination in block 302. Specifically, the resource allocation can indicate that the uplink data channel is reconfigured by at least one of: a predetermined combination of at least two fields of the resource allocation; a value of a channel state indication request state in the resource allocation; a predefined sequence in a field of the resource allocation; and at least a portion of the resource allocation being scrambled by a dedicated temporary identifier. In response to the determination in block 302, block 306 indicates that the UE utilises at least a first and a second instance of the uplink data channel to send the multi-cell periodic feedback of the channel state information.

The following reviews some of the non-limiting examples that are detailed with more particularity above. In one specific embodiment, the resource allocation indicates that the uplink data channel is reconfigured by the predetermined combination of at least two fields, and the predetermined combination is inconsistent for user equipment that are not capable of multi-cell periodic feedback of channel state information. In the above non-limiting example, the predetermined combination was a modulation and coding scheme field set to a reserved value; a channel state indication field set to not trigger CSI; and a new data indication field indicating the uplink data channel is not a retransmission.

In another specific embodiment, the resource allocation indicates that the uplink data channel is reconfigured by the channel state indication request state having a value of 01. Alternatively the values 10 or 11 in this field can be the trigger indication.

In a still further exemplary embodiment, the resource allocation indicates that the uplink data channel is reconfigured by the predefined sequence in a resource allocation field of the resource allocation, in which the predefined sequence is received by the UE in RRC signalling. In this embodiment, the resource allocation may further indicate an offset (such via a CSI request bit or a MCS state) for indicating a location of the first instance of the uplink data channel relative to a predefined location.

And in the final set of examples from above, the resource allocation indicates that the uplink data channel is reconfigured by at least a portion of the resource allocation being scrambled by the dedicated temporary identifier (p-CSI C-RNTI) in conjunction with a predefined indication in a NDI field, or a format differentiation field/flag, or a MCS field, or a DAI field.

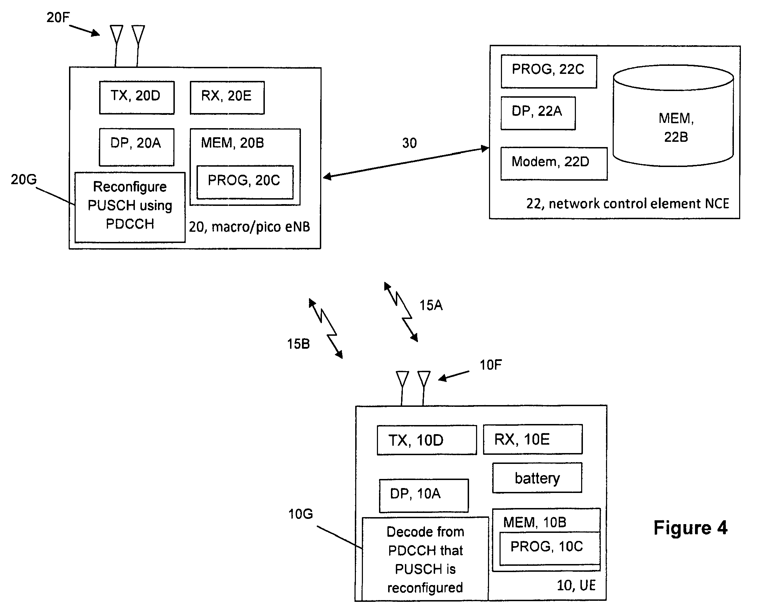

Reference is now made to Figure 4 for illustrating a simplified block diagram of various electronic devices and apparatus that are suitable for use in practising some example embodiments of this invention. In Figure 4, the cellular wireless network is represented by a network control element 22 and the eNB 20. The eNB 20 may be more generally referred to as an access node if these teachings are implemented in other than an E-UTRAN environment. The eNB 20 is adapted for communication over wireless links 15A, 15B with an apparatus such as one or more portable radio devices/terminals denoted more generically above as a UE 10. The network may also provide connectivity with a broader network (e.g. another cellular network and/or a publicly switched telephone network PSTN and/or a data communications network/Internet).

The UE 10 includes processing means such as at least one data processor (DP) 10A, storing means such as at least one computer-readable memory (MEM) 10B storing at least one computer program (PROG) 10C, and communicating means such as a transmitter TX 10D and a receiver RX 10E for bidirectional wireless communications with the network access node/eNB 20 via one or more antennas 10F. Also stored in the MEM 10B at reference number 10G is the UE's rules for decoding the PDCCH and determining from it whether or not the PUSCH is reconfigured for multi-cell periodic CSI reporting as is detailed more particularly above.

The eNB 20 also includes processing means such as at least one data processor (DP) 20A, storing means such as at least one computer-readable memory (MEM) 20B storing at least one computer program (PROG) 20C, and communicating means such as a transmitter TX 20D and a receiver RX 20E for bidirectional wireless communications with the UE 10 via one or more antennas 20F. Also shown for the eNB 20 is a program at 20G for using a PDCCH to reconfigure a PUSCH for multi-cell periodic CSI reporting.

For completeness there is also shown a network control element 22 which has its own processing means such as at least one data processor (DP) 22A, storing means such as at least one computer-readable memory (MEM) 22B storing at least one computer program (PROG) 22C, and communicating means such as a modem 22D for bidirectional communications with the eNB 20 via a data/control path 30.

While not particularly illustrated for the UE 10 or for the eNB 20, those devices are also assumed to include as part of their wireless communicating means a modem which may be inbuilt on an RF front end chip within those devices 10, 20 and which also carries the TX 10D/20D and the RX 10E/20E.

At least one of the PROGs 10C/10G in the UE 10 is assumed to include program instructions that, when executed by the associated DP 10A, enable the device to operate in accordance with the exemplary embodiments of this invention, as detailed above particularly with respect to Figure 3 and implied therefrom for the eNB 20. The eNB 20 also has software stored in its MEM 20B to implement certain aspects of these teachings as detailed above. In this regard, the exemplary embodiments of this invention may be implemented at least in part by computer software stored on the MEM 10B, 20B which is executable by the DP 10A of the UE 10 and/or by the DP 20A of the access node/eNB 20, or by hardware, or by a combination of tangibly stored software and hardware (and tangibly stored firmware). Electronic devices implementing these aspects of the invention may not be the entire UE 10 or the access node/eNB 20, but exemplary embodiments may be implemented by one or more components of same such as the above described tangibly stored software, hardware, firmware and DP, modem, system on a chip SOC or an application specific integrated circuit ASIC.

In general, the various embodiments of the UE 10 can include, but are not limited to personal portable digital devices having wireless communication capabilities, including but not limited to user equipment, cellular telephones, navigation devices, laptop/palmtop/tablet computers, digital cameras and Internet appliances, as well as machine-to-machine devices which operate without direct user action.

Various embodiments of the computer readable MEMs 10B, 20B, 22B include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Depending on the implementation the database system memory 22B may be a disc array. Various embodiments of the DPs 10A, 20A, 22A include but are not limited to general purpose computers, special purpose computers, microprocessors, digital signal processors (DSPs), and multi-core processors.

Some of the various features of the above non-limiting embodiments may be used to advantage without the corresponding use of other described features. The foregoing description should therefore be considered as merely illustrative of the principles, teachings and exemplary embodiments of this invention, and not in limitation thereof.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A method for controlling a user equipment, the method comprising:

   determining from a received downlink control information that an uplink data channel is reconfigured for multi-cell periodic feedback of channel state information, and in response to the determining, utilising at least a first and a second instance of the uplink data channel to send the multi-cell periodic feedback of the channel state information, said method **characterized in that** the control information indicates that the uplink data channel is reconfigured by at least one of:

   a predetermined combination of at least two fields of the control information, wherein the predetermined combination is inconsistent for user equipment which are not capable of multi-cell periodic feedback of channel state information, and wherein the predetermined combination comprises a modulation and coding scheme field set to a reserved value, a channel state indication field set to not trigger CSI, and a new data indication field indicating the uplink data channel is not a retransmission; and
   a predefined sequence in a resource allocation field of the control information, in which the predefined sequence is received by the user equipment in radio resource control signalling.

2. A method according to claim 1, in which the control information indicates that the uplink data channel is reconfigured by the predefined sequence in a resource allocation field of the control information and the control information comprises an offset for indicating a location of the first instance of the uplink data channel relative to a predefined location.

3. A method according to claim 2, in which the offset is indicated in one of a channel state information request bit and a modulation and coding scheme state.

4. Apparatus for controlling a user equipment (10), the apparatus comprising:

   a processing system (10A) constructed and arranged to cause the apparatus to perform:

   determining from a received downlink control information that an uplink data channel is reconfigured for multi-cell periodic feedback of channel state information, and in response to the determining, utilising at least a first and a second instance of the uplink data channel to send the multi-cell periodic feedback of the channel state information, **characterized in that** the control information indicates that the uplink data channel is reconfigured by at least one of:

   a predetermined combination of at least two fields of the control information, wherein the predetermined combination is inconsistent for user equipment which are not capable of multi-cell periodic feedback of channel state information, and wherein the predetermined combination comprises a modulation and coding scheme field set to a reserved value, a channel state indication field set to not trigger CSI, and a new data indication field indicating the uplink data channel is not a retransmission; and
   a predefined sequence in resource allocation a field of the control information, in which the predefined sequence is received by the user equipment in radio resource control signalling.

**5.** Apparatus according to claim 4, in which the control information indicates that the uplink data channel is reconfigured by the predefined sequence in a resource allocation field of the control information and the control information comprises an offset for indicating a location of the first instance of the uplink data channel relative to a predefined location.

**6.** Apparatus according to claim 5, in which the offset is indicated in one of a channel state information request bit and a modulation and coding scheme state.

**7.** A computer program comprising a set of instructions, which, when executed on a user equipment, causes the user equipment to perform the steps of:

determining from a received downlink control information that an uplink data channel is reconfigured for multi-cell periodic feedback of channel state information, and in response to the determining, utilising at least a first and a second instance of the uplink data channel to send the multi-cell periodic feedback of the channel state information, **characterised in that** the control information indicates that the uplink data channel is reconfigured by at least one of:

a predetermined combination of at least two fields of the control information, wherein the predetermined combination is inconsistent for user equipment which are not capable of multi-cell periodic feedback of channel state information, and wherein the predetermined combination comprises a modulation and coding scheme field set to a reserved value, a channel state indication field set to not trigger CSI, and a new data indication field indicating the uplink data channel is not a retransmission; and a predefined sequence in a resource allocation field of the control information, in which the predefined sequence is received by the user equipment in radio resource control signalling.

**8.** A computer program according to claim 7, in which the control information indicates that the uplink data channel is reconfigured by the predefined sequence in a resource allocation field of the control information and the control information comprises an offset for indicating a location of the first instance of the uplink data channel relative to a predefined location.

**9.** A computer program according to claim 8, in which the offset is indicated in one of a channel state information request bit and a modulation and coding scheme state.

**Patentansprüche**

**1.** Verfahren zum Steuern eines Benutzergeräts, wobei das Verfahren umfasst:

- Bestimmen anhand von empfangenen Downlink-Steuerinformationen, dass ein Uplink-Datenkanal für eine periodische Mehrzellen-Rückmeldung von Kanalzustandsinformationen rekonfiguriert wird, und in Antwort auf die Bestimmung Verwenden wenigstens einer ersten und einer zweiten Instanz des Uplink-Datenkanals zum Senden der periodischen Mehrzellen-Rückmeldung der Kanalzustandsinformationen, wobei das Verfahren **dadurch gekennzeichnet ist, dass** die Steuerinformationen angeben, dass der Uplink-Datenkanal rekonfiguriert wird durch:
- eine vorgegebene Kombination von wenigstens zwei Feldern der Steuerinformationen, wobei die vorgegebene Kombination mit Benutzergeräten inkompatibel ist, die zur einer periodischen Mehrzellen-Rückmeldung von Kanalzustandsinformationen nicht fähig sind, und wobei die vorgegebene Kombination ein Modulations- und Codierschemafeld, das auf einen reservierten Wert eingestellt ist, ein Kanalzustandsangabefeld, das darauf eingestellt ist, keine Kanalzustandsinformationen auszulösen, und ein Neue-Daten-Angabefeld umfasst, das angibt, dass der Uplink-Datenkanal keine erneute Übertragung ist, und/oder
- eine vordefinierte Sequenz in einem Ressourcenzuweisungsfeld der Steuerinformationen, wobei die vordefinierte Sequenz bei einer Funkressourcensteuersignalisierung vom Benutzergerät empfangen wird.

**2.** Verfahren nach Anspruch 1, wobei die Steuerinformationen angeben, dass der Uplink-Datenkanal durch die vordefinierte Sequenz in einem Ressourcenzuweisungsfeld der Steuerinformationen rekonfiguriert wird, und wobei die Steuerinformationen einen Versatz umfassen, um eine Position der ersten Instanz des Uplink-Datenkanals relativ zu einer vordefinierten Position anzugeben.

**3.** Verfahren nach Anspruch 2, wobei der Versatz in einem Kanalzustandsinformationsanforderungsbit oder einem Modulations- und Codierschemazustand angegeben ist.

**4.** Vorrichtung zum Steuern eines Benutzergeräts (10), wobei die Vorrichtung umfasst:

- ein Verarbeitungssystem (10A), das dazu eingerichtet und ausgelegt ist, die Vorrichtung zu veranlassen, Folgendes durchzuführen:

- Bestimmen anhand von empfangenen Downlink-Steuerinformationen, dass ein Uplink-Datenkanal für eine periodische Mehrzellen-Rückmeldung von Kanalzustandsinformationen rekonfiguriert wird, und in Antwort auf die Bestimmung Verwenden wenigstens einer ersten und einer zweiten Instanz des Uplink-Datenkanals zum Senden der periodischen Mehrzellen-Rückmeldung der Kanalzustandsinformationen, **dadurch gekennzeichnet, dass** die Steuerinformationen angeben, dass der Uplink-Datenkanal rekonfiguriert wird durch:

- eine vorgegebene Kombination von wenigstens zwei Feldern der Steuerinformationen, wobei die vorgegebene Kombination mit Benutzergeräten inkompatibel ist, die zur einer periodischen Mehrzellen-Rückmeldung von Kanalzustandsinformationen nicht fähig sind, und wobei die vorgegebene Kombination ein Modulations- und Codierschemafeld, das auf einen reservierten Wert eingestellt ist, ein Kanalzustandsangabefeld, das darauf eingestellt ist, keine Kanalzustandsinformationen auszulösen, und ein Neue-Daten-Angabefeld umfasst, das angibt, dass der Uplink-Datenkanal keine erneute Übertragung ist, und/oder
- eine vordefinierte Sequenz in einem Ressourcenzuweisungsfeld der Steuerinformationen, wobei die vordefinierte Sequenz bei einer Funkressourcensteuersignalisierung vom Benutzergerät empfangen wird.

**5.** Vorrichtung nach Anspruch 4, wobei die Steuerinformationen angeben, dass der Uplink-Datenkanal durch die vordefinierte Sequenz in einem Ressourcenzuweisungsfeld der Steuerinformationen rekonfiguriert wird, und wobei die Steuerinformationen einen Versatz umfassen, um eine Position der ersten Instanz des Uplink-Datenkanals relativ zu einer vordefinierten Position anzugeben.

**6.** Vorrichtung nach Anspruch 5, wobei der Versatz in einem Kanalzustandsinformationsanforderungsbit oder einem Modulations- und Codierschemazustand angegeben ist.

**7.** Computerprogramm, das einen Befehlssatz umfasst, der, wenn er in einem Benutzergerät ausgeführt wird, das Benutzergerät veranlasst, die Schritte durchzuführen:

- Bestimmen anhand von empfangenen Downlink-Steuerinformationen, dass ein Uplink-Datenkanal für eine periodische Mehrzellen-Rückmeldung von Kanalzustandsinformationen rekonfiguriert wird, und in Antwort auf die Bestimmung Verwenden wenigstens einer ersten und einer zweiten Instanz des Uplink-Datenkanals zum Senden der periodischen Mehrzellen-Rückmeldung der Kanalzustandsinformationen, **dadurch gekennzeichnet, dass** die Steuerinformationen angeben, dass der Uplink-Datenkanal rekonfiguriert wird durch:

- eine vorgegebene Kombination von wenigstens zwei Feldern der Steuerinformationen, wobei die vorgegebene Kombination mit Benutzergeräten inkompatibel ist, die zur einer periodischen Mehrzellen-Rückmeldung von Kanalzustandsinformationen nicht fähig sind, und wobei die vorgegebene Kombination ein Modulations- und Codierschemafeld, das auf einen reservierten Wert eingestellt ist, ein Kanalzustandsangabefeld, das darauf eingestellt ist, keine Kanalzustandsinformationen auszulösen, und ein Neue-Daten-Angabefeld umfasst, das angibt, dass der Uplink-Datenkanal keine erneute Übertragung ist, und/oder
- eine vordefinierte Sequenz in einem Ressourcenzuweisungsfeld der Steuerinformationen, wobei die vordefinierte Sequenz bei einer Funkressourcensteuersignalisierung vom Benutzergerät empfangen wird.

**8.** Computerprogramm nach Anspruch 7, wobei die Steuerinformationen angeben, dass der Uplink-Datenkanal durch die vordefinierte Sequenz in einem Ressourcenzuweisungsfeld der Steuerinformationen rekonfiguriert wird, und wobei die Steuerinformationen einen Versatz umfassen, um eine Position der ersten Instanz des Uplink-Datenkanals relativ zu einer vordefinierten Position anzugeben.

**9.** Computerprogramm nach Anspruch 8, wobei der Versatz in einem Kanalzustandsinformationsanforderungsbit oder einem Modulations- und Codierschemazustand angegeben ist.

**Revendications**

**1.** Procédé de commande d'un équipement utilisateur, le procédé comprenant :

la détermination, à partir d'informations de commande en liaison descendante reçues, qu'un canal de données en liaison montante est reconfiguré pour une rétroaction périodique à cellules multiples d'informations d'état de canal, et en réponse à la détermination, l'utilisation d'au moins un premier et un second cas du canal de données en liaison montante pour envoyer la rétroaction périodique à cellules multiples des informations d'état de canal, ledit procédé **caractérisé en ce que** les informations de commande indiquent que le canal de données en liaison montante est reconfiguré par au moins l'une de :

une combinaison prédéterminée d'au moins deux champs des informations de commande, dans lequel la combinaison prédéterminée est incompatible pour un équipement utilisateur, qui ne sont pas capables d'effectuer une rétroaction périodique à cellules multiples d'informations d'état de canal, et dans lequel la combinaison prédéterminée comprend un champ de schéma de codage et de modulation fixé à une valeur réservée, un champ d'indication d'état de canal fixé pour ne pas déclencher les CSI, et un nouveau champ d'indication de données indiquant que le canal de données en liaison montante n'est pas une retransmission ; et

une séquence prédéfinie dans un champ d'attribution de ressources des informations de commande, dans lequel la séquence prédéfinie est reçue par l'équipement utilisateur dans une signalisation de commande de ressources radio.

2. Procédé selon la revendication 1, dans lequel les informations de commande indiquent que le canal de données en liaison montante est reconfiguré par la séquence prédéfinie dans un champ d'attribution de ressources des informations de commande, et les informations de commande comprennent un décalage pour indiquer un emplacement du premier cas du canal de données en liaison montante par rapport à un emplacement prédéfini.

3. Procédé selon la revendication 2, dans lequel le décalage est indiqué dans l'un d'un bit de demande d'informations d'état de canal et d'un état de schéma de codage et de modulation.

4. Appareil permettant de commander un équipement utilisateur (10), l'appareil comprenant :

un système de traitement (10A) élaboré et conçu pour amener l'appareil à effectuer :

une détermination, à partir d'informations de commande en liaison descendante reçues, qu'un canal de données en liaison montante est reconfiguré pour une rétroaction périodique à cellules multiples d'informations d'état de canal, et en réponse à la détermination, l'utilisation d'au moins un premier et un second cas du canal de données en liaison montante pour envoyer la rétroaction périodique à cellules multiples des informations d'état de canal, **caractérisé en ce que** les informations de commande indiquent que le canal de données en liaison montante est reconfiguré par au moins l'une de :

une combinaison prédéterminée d'au moins deux champs des informations de commande, dans lequel la combinaison prédéterminée est incompatible pour un équipement utilisateur, qui ne sont pas capables de rétroaction périodique à cellules multiples d'informations d'état de canal, et dans lequel la combinaison prédéterminée comprend un champ de schéma de codage et de modulation fixé à une valeur réservée, un champ d'indication d'état de canal fixé pour ne pas déclencher les CSI, et un nouveau champ d'indication de données indiquant que le canal de données en liaison montante n'est pas une retransmission ; et

une séquence prédéfinie dans un champ d'attribution de ressources des informations de commande, dans lequel la séquence prédéfinie est reçue par l'équipement utilisateur dans une signalisation de commande de ressources radio.

5. Appareil selon la revendication 4, dans lequel les informations de commande indiquent que le canal de données en liaison montante est reconfiguré par la séquence prédéfinie dans un champ d'attribution de ressources des informations de commande, et les informations de commande comprennent un décalage pour indiquer un emplacement du premier cas du canal de données en liaison montante par rapport à un emplacement prédéfini.

6. Appareil selon la revendication 5, dans lequel le décalage est indiqué dans l'un d'un bit de demande d'informations d'état de canal et d'un état de schéma de codage et de modulation.

7. Programme informatique comprenant un ensemble d'instructions, qui, lorsqu'elles sont exécutées sur un équipement utilisateur, amènent l'équipement utilisateur à effectuer les étapes suivantes :

une détermination, à partir d'informations de commande en liaison descendante reçues, qu'un canal de données en liaison montante est reconfiguré pour une rétroaction périodique à cellules multiples d'informations d'état de canal, et en réponse à la détermination, utiliser au moins un premier et un second cas du canal de données en liaison montante pour envoyer la rétroaction périodique à cellules multiples des informations d'état de canal, **caractérisé en ce que** les informations de commande indiquent que le canal de données en liaison montante est reconfiguré par au moins l'une de :

une combinaison prédéterminée d'au moins deux champs des informations de commande, dans lequel la combinaison prédéterminée est incompatible pour un équipement utilisateur, qui ne sont pas capables de rétroaction périodique à cellules multiples d'informations d'état de canal, et dans lequel la combinaison prédéterminée comprend un champ de schéma de codage et de modulation fixé à une valeur réservée, un champ d'indication d'état de canal fixé pour ne pas déclencher les CSI, et un nouveau champ d'indication de données indiquant que le canal de données en liaison montante n'est pas une retransmission ; et une séquence prédéfinie dans un champ d'attribution de ressources des informations de commande, dans lequel la séquence prédéfinie est reçue par l'équipement utilisateur dans une signalisation de commande de ressources radio.

8. Programme informatique selon la revendication 7, dans lequel les informations de commande indiquent que le canal de données en liaison montante est reconfiguré par la séquence prédéfinie dans un champ d'attribution de ressources des informations de commande, et les informations de commande comprennent un décalage pour indiquer un emplacement du premier cas du canal de données en liaison montante par rapport à un emplacement prédéfini.

9. Programme informatique selon la revendication 8, dans lequel le décalage est indiqué dans l'un d'un bit de demande d'informations d'état de canal et d'un état de schéma de codage et de modulation.

Figure 1A: Prior Art

carrier/cell bandwidth

system bandwidth

PCell SCell#1 SCell#2 SCell#3

104, SCell

102, PCell

20, eNB

10. UE

Figure 1B

EP 2 848 064 B1

202: RRC signaling to config UE for multi-cell p-CSI

204: CSI-RS on PCell

206: measure 1$^{st}$ CSI on PCell

208: CSI-RS on SCell

210: measure 2$^{nd}$ CSI on SCell

212: PDCCH in sf i that reconfigures PUSCH for multi p-CSI

214: decode to learn periodic PUSCHs for sending multi-cell CSIs

216A: PUSCH in sf i+k with multiplexed CSIs of PCell & SCell

new CSI-RSs and measurements

216B: PUSCH in next sf with multiplexed new CSIs of PCell & SCell

**Figure 2**

EP 2 848 064 B1

302: determine from a received downlink resource allocation (PDCCH) that an uplink data channel (PUSCH) is reconfigured for multi-cell periodic feedback of channel state information

304: resource allocation indicates this reconfiguration by:

- a predetermined combination of at least two fields of the resource allocation;
- a value of a channel state indication request state in the resource allocation;
- a predefined sequence in a field of the resource allocation; or
- at least a portion of the resource allocation being scrambled by a dedicated temporary identifier

306: utilize at least a first and a second instance of the uplink data channel to send the multi-cell periodic feedback of the channel state information

## Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011085230 A2
- WO 2011034321 A2

**Non-patent literature cited in the description**

- *Meeting Minutes of 3GPP RAN1,* 26 March 2012
- *3GPP TS 36.213,* December 2012
- *3GPP TSG RAN WG1,* November 2011, 14-18